# EUROPEAN PATENT APPLICATION

(11) **EP 4 435 909 A1**
(43) Date of publication of application: **25.09.2024**
(21) Application number: 22901668.8
(22) Date of filing: 24.11.2022
(51) Int. Cl.: H01M 8/106, H01M 8/1062, H01M 8/1069, H01M 8/1004, H01M 8/10

(54) **REINFORCED COMPOSITE MEMBRANE FOR FUEL CELL, MANUFACTURING METHOD THEREFOR, AND MEMBRANE-ELECTRODE ASSEMBLY COMPRISING SAME**

(30) Priority: 30.11.2021 KR 20210169152; 23.11.2022 KR 20220157972
(71) Applicant: Kolon Industries, Inc., Seoul 07793 (KR)
(72) Inventor: PARK, Jung Hwa, Seoul 07793 (KR); LEE, Dong Hoon, Seoul 07793 (KR); SONG, Kum Suck, Seoul 07793 (KR); YUN, Sung Hyun, Seoul 07793 (KR); YUM, Seung Jib, Seoul 07793 (KR); OH, Chang Hoon, Seoul 07793 (KR); LEE, Hye Song, Seoul 07793 (KR); LEE, Eun Su, Seoul 07793 (KR)
(74) Representative: Ter Meer Steinmeister & Partner
(86) International application number: PCT/KR2022/018671
(87) International publication number: WO 2023/101310

(57) **Abstract**

The present disclosure relates to a reinforced composite membrane for a fuel cell, comprising a porous support and a hydrogen ion-conductive polymer; a manufacturing method therefor; and a membrane-electrode assembly comprising same, the reinforced composite membrane having the hydrogen ion-conductive polymer impregnated into the porous support, or comprising, on at least one surface of the porous support, an electrolyte layer comprising the hydrogen ion-conductive polymer, wherein the porous support further comprises a compound capable of trapping metal ions.

## Description

### [TECHNICAL FIELD]

The present disclosure relates to a reinforced composite membrane for a fuel cell, a preparation method thereof, and a membrane-electrode assembly for a fuel cell including the same.

### [BACKGROUND ART]

Recently, due to the rapid spread of portable electronic devices and wireless communication devices, much interest and research are being conducted for the development of fuel cells as batteries, which are portable power sources, fuel cells for pollution-free vehicles, and fuel cells for power generation as clean energy sources.

A polymer electrolyte membrane fuel cell (PEMFC) using hydrogen as fuel can be operated in a wide temperature range, and has been highlighted as a power supply for vehicles and household due to its advantages capable of simplifying cooling devices and sealing parts, minimizing the use of a humidifier by using low-humidity hydrogen as fuel, fast operation, *etc.* In addition, compared to other types of fuel cells, PEMFC is a high-output fuel cell with high current density, can be operated in a wide temperature range, has a simple structure, and has fast start-up and response characteristics.

Many efforts to improve the long-term performance of an electrolyte membrane, which is a key component of a fuel cell, have recently been in progress. In order to achieve price competitiveness and improve performance at the same time, high ionic conductivity at low humidity is a very important factor to be met.

Among various types of electrolyte membranes, the perfluorinated electrolyte membrane, despite its excellent mechanical strength and electrochemical properties, has disadvantages in that the membrane price is extremely high due to a complicated preparation process and has a low glass transition temperature due to its fluorinated structure.

As an alternative to such perfluorinated electrolyte membranes, hydrocarbon polymers have been actively developed. In the case of hydrocarbon polymer electrolyte membranes, it is an important task to secure appropriate mechanical strength at the level of perfluorinated electrolyte membranes.

In addition, the hydrocarbon polymer electrolyte membrane has serious problems in that oxidation of the hydrocarbon polymer electrolyte membrane can be accelerated by hydrogen peroxide or hydroxy radicals generated during the operation of the polymer electrolyte membrane, and mechanical durability is significantly reduced when a single membrane is used, thereby resulting in deterioration of chemical/mechanical stability of the polymer electrolyte membrane. For the realization of high performance, long-term stability, high durability, and low price, the electrolyte membrane is required to have high ionic conductivity, secured physicochemical stability, high mechanical strength, and high water stability. In order to meet these requirements, the introduction of a reinforced composite membrane can be an alternative.

Meanwhile, in the process of commercialization of the reinforced composite membrane, there have been various demands in the industrial field for technologies for improving various performances in addition to high durability. For example, there is a technology for adjusting the gas permeability of the reinforced composite membrane, a technology for improving the stability between the electrolyte and the support, a technology for facilitating the impregnation of the electrolyte, *etc*., and under the circumstances, there was a need for the study on the method to improve the performance of the reinforced composite membrane.

### [DETAILED DESCRIPTION OF INVENTION]

### [TECHNICAL PROBLEMS]

An object of the present invention is to provide a reinforced composite membrane for a fuel cell capable of maintaining the performance of the fuel cell for a long time and capable of improving its lifetime by applying a specific compound capable of preventing the migration of metal ions, such as a radical scavenger, to a porous support of the reinforced composite membrane including a porous support and a hydrogen ion conductive polymer.

Another object of the present disclosure is to provide a method for preparing the reinforced composite membrane.

Still another object of the present disclosure is to provide a membrane-electrode assembly including the reinforced composite membrane.

Still another object of the present disclosure is to provide a fuel cell including the membrane-electrode assembly.

### [TECHNICAL SOLUTION]

In an embodiment of the present disclosure, there is provided a reinforced composite membrane including a porous support and a hydrogen ion conductive polymer, in which the hydrogen ion conductive polymer is impregnated into the porous support, or includes an electrolyte layer containing a hydrogen ion conductive polymer on at least one surface of the porous support, and the porous support further includes a compound capable of trapping metal ions.

The compound capable of trapping metal ions may include polyethylene glycol, polypropylene glycol, polybutylene glycol, crown ether, or a combination thereof.

The weight average molecular weight of the polyethylene glycol, polypropylene glycol, and polybutylene glycol may be 60 g/mol to 6,000 g/mol.

The crown ether is 12-crown-4-ether, 15-crown-5-ether, 18-crown-6-ether, benzo-15-crown-5-ether, *N*-phenylazo-15-crown-5-ether, 2-aminomethyl-18-crown-6, or a combination thereof.

The compound capable of trapping metal ions may be included in an amount of 1 wt% to 50 wt% based on the total weight of the porous support.

The metal ions include cerium (Ce) ions, manganese (Mn) ions, tungsten (W) ions, cobalt (Co) ions, vanadium (V) ions, nickel (Ni) ions, chromium (Cr) ions, zirconium (Zr) ions, yttrium (Y) ions, iridium (Ir) ions, iron (Fe) ions, titanium (Ti) ions, molybdenum (Mo) ions, lanthanum (La) ions, neodymium (Nd) ions, or a combination thereof.

The porous support may have a thickness of 1 µm to 100 µm.

In another embodiment of the present disclosure, there is provided a method for preparing a reinforced composite membrane for a fuel cell, which includes: preparing a porous support with a composition containing a precursor of a polymer for forming a porous support and a compound capable of trapping metal ions; and impregnating the porous support with a hydrogen ion conductive polymer, or forming an electrolyte layer including the hydrogen ion conductive polymer on at least one surface of the porous support.

The polymer for forming the porous support may be a hydrocarbon-based polymer insoluble in an organic solvent.

The compound capable of trapping metal ions may include polyethylene glycol, polypropylene glycol, polybutylene glycol, crown ether, or a combination thereof.

The compound capable of trapping metal ions may be included in an amount of 1 to 50 parts by weight based on 100 parts by weight of the composition.

The step of preparing the porous support may be performed by electrospinning the composition. According to an embodiment, the electrospinning may be performed by applying an electric field of 850 V/cm to 3,500 V/cm.

The step of forming the electrolyte layer including the hydrogen ion conductive polymer may include a step of dispersing the hydrogen ion conductive polymer in a solvent to prepare a mixed solution, a step of casting the mixed solution followed by drying to form an electrolyte layer, and a step of laminating the electrolyte layer with the porous support.

In still another embodiment of the present disclosure, there is provided a membrane-electrode assembly, which includes an anode electrode and a cathode electrode disposed opposite to each other, and the reinforced composite membrane for a fuel cell interposed between the anode electrode and the cathode electrode.

In still another embodiment of the present disclosure, there is provided a fuel cell including the membrane-electrode assembly.

### [EFFECT OF INVENTION]

According to the present disclosure, by way of introducing a specific compound capable of trapping metal ions, such as radical scavengers, inside or outside the porous support of the reinforced composite membrane, not only it is possible to reduce the mobility of metal ions thereby inhibiting the migration of metal ions, but also it is possible to prevent the aggregation of the radical scavenger itself thereby improving dispersibility.

Therefore, the performance of the fuel cell can be maintained for a long period of time without chemical deterioration of the electrolyte membrane and/or the electrode due to radicals generated during operation of the fuel cell, specifically, hydroxy radicals, and its durability can be remarkably improved.

### [BRIEF DESCRIPTION OF THE DRAWING]

FIG. 1 is a schematic diagram schematically illustrating a reinforced composite membrane for a fuel cell according to an embodiment of the present disclosure.
FIG. 2 is a schematic cross-sectional view of a membrane-electrode assembly according to an embodiment of the present disclosure.
FIG. 3 is a schematic diagram showing the overall configuration of a fuel cell according to an embodiment of the present disclosure.

### [BEST MODE FOR CARRYING OUT THE INVENTION]

Hereinafter, embodiments of the present disclosure will be described in detail so that those skilled in the art can easily implement the present disclosure. However, the present disclosure may be embodied in many different forms and is not limited to the embodiments described herein.

In the drawings, the thickness is enlarged in order to clearly express various layers and regions, and the same reference numerals are indicated to similar parts throughout the specification. When a part such as a layer, film, region, plate, *etc.* is described to be "on" another part, this includes not only the case where it is "directly on" the other part, but also the case where there is another part interposed therebetween. Conversely, when a part is described to be "directly on" another part, it means that there is no other part interposed therebetween.

As used herein, the term "nano" means nanoscale, and it includes sizes of 1 µm or less.

Hereinafter, a reinforced composite membrane for a fuel cell according to an embodiment will be described.

The present disclosure relates to a reinforced composite membrane for a fuel cell, which, by way of applying a specific compound capable of preventing migration of metal ions, such as a radical scavenger, to a porous support of a reinforced composite membrane including a porous support and a hydrogen ion conductive polymer, can maintain the performance of a fuel cell for a long period of time and improve the lifetime of the same.

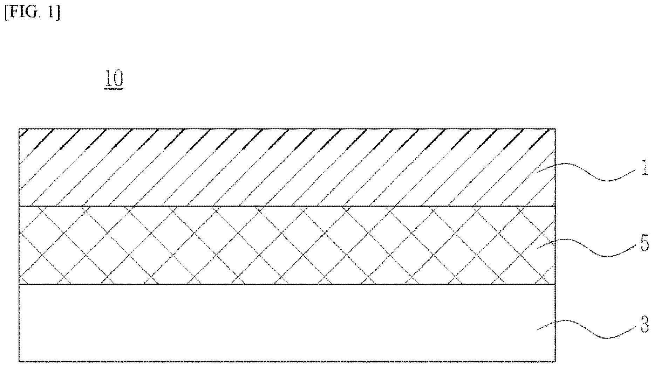

FIG. 1 is a schematic diagram schematically illustrating a reinforced composite membrane for a fuel cell according to an embodiment of the present disclosure.

Referring to FIG. 1, a reinforced composite membrane 10 for a fuel cell according to an embodiment is a reinforced composite membrane including a porous support 5 and a hydrogen ion conductive polymer, in which in the reinforced composite membrane, the hydrogen ion conductive polymer is impregnated into the porous support 5, or the reinforced composite membrane includes an electrolyte layer (1 and/or 3) containing the hydrogen ion conductive polymer on at least one surface of the porous support 5, in which the porous support may further include a compound that can trap metal ions.

Fuel cells can be classified into alkaline electrolyte fuel cells and polymer electrolyte membrane fuel cells (PEMFC) depending on the state and type of electrolyte. Due to the advantages such as a low operating temperature of below 100°C, fast start-up, response characteristics, and excellent durability, fuel cells have been highlighted as a power supply for portables, vehicles, and household.

Representative examples of a polymer electrolyte fuel cell include a proton exchange membrane fuel cell (PEMFC) that uses hydrogen gas as fuel, a direct methanol fuel cell (DMFC) that uses liquid methanol as fuel, *etc.*

Summarizing the reactions occurring in the polymer electrolyte membrane fuel cell, first, when a fuel such as hydrogen gas is supplied to an oxidizing electrode, hydrogen ions (H⁺) and electrons (e⁻) are generated by the oxidation reaction of hydrogen at the oxidizing electrode. The hydrogen ions generated are transferred to the reducing electrode through the ion exchange membrane, and the electrons generated are transferred to the reducing electrode through an external circuit. Oxygen gas is supplied from the reducing electrode, and oxygen is combined with hydrogen ions and electrons to generate water by a reduction reaction of oxygen.

Meanwhile, in order to realize the commercialization of polymer electrolyte membrane fuel cells, there are still many technical barriers to solve, and essential factors to improve are realization of high performance, long lifetime, and low price. The component that has the highest influence in this matter is a membrane-electrode assembly, and among them, the ion exchange membrane is one of the key elements that affects most on the performance and price of the MEA.

Requirements for the ion exchange membrane necessary for the operation of the polymer electrolyte membrane fuel cell include high hydrogen ion conductivity, chemical stability, low fuel permeability, high mechanical strength, a low water content, excellent dimensional stability, *etc.* There is a tendency for conventional polymer electrolyte membranes that it is difficult to normally exhibit high performance in a specific temperature and relative humidity environment, particularly under a high temperature or low humidity condition. Therefore, the polymer electrolyte membrane fuel cell to which the conventional ion exchange membrane is applied is limited in its scope of use.

Fluorine-based ion exchange membranes, such as Nafion, which are currently known to exhibit the best performance, have limitations due to complexity of its preparation process, difficulty in preparation technology, high price, *etc.* There are still many technical barriers to be overcome due to problems such as low hydrogen ion conductivity under high temperature/low humidity conditions, non-uniform interfacial properties, and relatively poor durability.

In addition, such an ion exchange membrane requires high ion conductivity and excellent durability at the same time. In particular, when the fuel cell is operated for a long period of time, deterioration of the fuel cell occurs due to a decrease in the thickness of the electrolyte membrane and formation of pin-holes due to the weak chemical durability of the ion exchange membrane.

Radicals generated during the operation of a fuel cell are known to be the main cause of deterioration of the polymer electrolyte membrane. For example, during the reduction reaction of oxygen at the reducing electrode, hydrogen peroxide (H₂O₂) is generated, and from this hydrogen peroxide, a hydrogen peroxide radical (HO₂·) and/or a hydroxy radical (·OH) can be generated. In addition, when oxygen molecules in the air supplied to the reducing electrode pass through the polymer electrolyte membrane and reach the oxidizing electrode, hydrogen peroxide is also generated at the oxidizing electrode, thereby resulting in generation of hydrogen peroxide radicals and/or hydroxy radicals. These radicals cause deterioration of ionomers (*e.g*., a polymer having a sulfonic acid group) included in the polymer electrolyte membrane, thereby reducing the ionic conductivity of the electrolyte membrane.

In order to prevent deterioration of a polymer electrolyte membrane (more specifically, ionomers) due to radicals, introduction of a radical scavenger capable of removing the radicals has been proposed.

However, the radical scavenger dispersed in the electrolyte membrane in the form of particles has a problem in that it migrates during operation of the fuel cell. That is, since the amount of radical scavengers capable of removing radicals is reduced, as the operation time of the fuel cell increases, the removal of radicals is not appropriately performed, thereby resulting in rapid deterioration of performance of the fuel cell.

In addition, metal ions generated through ionization of radical scavengers are migrated by water. Since these metal ions have a very high reduction potential, they oxidize the components of the electrode (*e.g*., platinum and/or carbon), thereby causing deterioration of the performance of the fuel cell.

In this regard, the reinforced composite membrane for a fuel cell according to the present disclosure further includes a porous support in an electrolyte membrane containing a hydrogen ion conductive polymer so as to improve the physical stability and mechanical properties of the electrolyte membrane, and at the same time, prevent the migration of radical scavengers capable of removing metal ions, specifically radicals generated during the fuel cell operation process, by the porous support, thereby capable of maintaining the performance of the fuel cell for a long period of time and improving the lifetime of the fuel cell.

The porous support 5 serves to improve dimensional stability by enhancing the mechanical strength of the reinforced composite membrane and by inhibiting volume expansion due to moisture, and a conventional porous support used in the art may be used, or it may be prepared by chemically curing nanofibers of the polymer precursor prepared by electrospinning a solution including a polymer precursor for forming a porous support.

It is preferable that the porous support 5 includes a hydrocarbon-based polymer, which is insoluble in common organic solvents and thus exhibits excellent chemical resistance, facilitates the process of filling the ion conductor inside the pores of the porous support, and also has hydrophobicity thus preventing the risk of shape deformation due to moisture in a high-humidity environment. Examples of the hydrocarbon-based polymer to be used may include nylon, polyvinylidene fluoride (PVDF), polyphenylene sulfide (PPS), polyether ether ketone (PEEK), polylactic acid (PLA), polyimide (PI), polybenzoxazole (PBO), polybenzimidazole (PBI), polyamideimide (PAI), polyethyleneterephthalate (PET), polyethylene (PE), polytetrafluoroethylene (PTFE), polypropylene (PP), a copolymer thereof, or a mixture thereof, and among them, polyimide or polytetrafluoroethylene with excellent heat resistance, chemical resistance, and dimensional stability are preferred.

In an embodiment, the porous support 5 may have a thickness of 1 µm to 100 µm, for example, 1 µm to 75 µm, preferably 1 µm to 50 µm, and more preferably 3 µm to 40 µm. When the thickness of the porous support 5 is less than 1 µm, the physical and mechanical properties of the reinforced composite membrane are not sufficiently secured, and thus there is a risk of reduced durability and dimensional stability, whereas when the thickness exceeds 75 µm, there is a problem in that the impregnation efficiency of the hydrogen ion conductive polymer decreases, and thus the yield of the membrane decreases, and when the thickness exceeds 100 µm, it is difficult to impregnate the ion conductive polymer, which may result in a decrease in hydrogen ion conductivity and deterioration in membrane performance.

The porosity of the porous support 5 may be 40% to 95%, for example, 50% to 90%, and preferably 55% to 85%. When the porosity of the porous support 5 is less than 40%, the impregnation rate of the hydrogen ion conductive polymer may be reduced, resulting in a decrease in membrane performance, whereas when it exceeds 95%, the durability of the reinforced composite membrane may not be sufficiently secured.

The reinforced composite membrane 10 may be one, in which the hydrogen ion conductive polymer is impregnated into the porous support 5, or an electrolyte layer (1 and/or 3) including the hydrogen ion conductive polymer is formed on at least one surface of the porous support 5.

In the case of a reinforced composite membrane 10 where the hydrogen ion conductive polymer is impregnated into the porous support 5, the reinforced composite membrane in a form where the hydrogen ion conductive polymer is impregnated into the porous support 5 may be formed by preparing a mixed solution by dispersing the hydrogen ion conductive polymer in a solvent, and then immersing the porous support 5 in the mixed solution. The solvent may be water, a hydrophilic solvent, an organic solvent, or a mixed solvent of two or more of these.

In the case of a reinforced composite membrane 10 where an electrolyte layer (1 and/or 3) including the hydrogen ion conductive polymer is formed on at least one surface of the porous support 5, the reinforced composite membrane may be formed through a process of applying the mixed solution of the hydrogen ion conductive polymer on at least one surface of the porous support 5 and drying the same, or by casting the mixed solution and drying the same to form an electrolyte membrane containing hydrogen ion conductive polymer, and laminating this with at least one surface of the porous support 5. In addition, when the electrolyte layer (1 and/or 3) is formed in a multi-layered structure, there may be required a process of sequentially applying and drying or laminating mixed solutions having different concentrations and types of hydrogen ion conductive polymers to the porous support 5. In particular, the coating or casting of the mixed solutions may be performed through bar coating, comma coating, slot die, screen printing, spray coating, doctor blade, or laminating.

Alternatively, the reinforced composite membrane 10 may include a form in which the electrolyte layers (1 and/or 3) are formed, by laminating the electrolyte membrane containing a hydrogen ion polymer, on at least one surface of the porous support 5 impregnated with the hydrogen ion conductive polymer.

The drying may be performed by applying heat at 60°C to 100°C for about 1 to 30 minutes, or preferably at 70°C to 90°C for 5 to 15 minutes. In particular, when the drying temperature is below 60°C, the liquid retention property of the hydrogen ion conductive polymer solution may be reduced, whereas when it exceeds 100°C, the adhesion to electrodes may be deteriorated when preparing a reinforced composite membrane and/or a membrane-electrode assembly.

In the reinforced composite membrane 10 according to an embodiment, the hydrogen ion conductive polymer may be impregnated into the porous support 5, or an electrolyte layer (1 and/or 3) including a hydrogen ion conductive polymer may be provided on at least one surface of the porous support 5, and thus, it includes a structure in which the hydrogen ion conductive polymer is continuously distributed from the surface of the porous support 5 in the thickness direction of the reinforced composite membrane 10, thereby having the effect of improving the ion conductivity of the reinforced composite membrane.

As the hydrogen ion conductive polymer, any one may be used without particular limitation as long as it is used as a hydrogen ion conductor in the electrolyte membrane of a common fuel cell. Specifically, a fluorine-based polymer, a hydrocarbon-based polymer, or a mixture thereof, which have an excellent function of hydrogen ion conduction while having advantages in terms of price and being soluble in organic solvents, may be used.

Specifically, as the hydrogen ion conductive polymer, it is preferable to use a polymer having an ion exchange capacity (IEC) of 0.8 meq/g or more. By using such a polymer having a high ion exchange capacity, the content of the hydrogen ion conductive polymer in the composition for forming the porous support can be reduced, and as a result, it is possible to prevent deterioration of strength and dimensional stability of the porous support caused by the use of a hydrogen ion conductive polymer.

As specific examples, those selected from the group consisting of the following may be used: a fluorine-based polymer including poly(perfluorosulfonic acid), poly(perfluorocarboxylic acid), a copolymer of tetrafluoroethylene containing a sulfonic acid group and fluorovinyl ether, defluorinated sulfurized polyether ketone, and a mixture thereof; a hydrocarbon-based polymer including sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof; and a mixture thereof.

In an embodiment, the porous support 5 may further include a compound capable of trapping metal ions.

The metal ions are particles capable of removing peroxides or radicals that cause deterioration of the electrolyte membrane during the operation process of a fuel cell and thereby reduce the ion conductivity, and may refer to ions of transition metals or precious metals.

In an embodiment, the metal ion may be a cerium (Ce) ion, a manganese (Mn) ion, a tungsten (W) ion, a cobalt (Co) ion, a vanadium (V) ion, a nickel (Ni) ion, a chromium (Cr) ion, a zirconium (Zr) ion, a yttrium (Y) ion, an iridium (Ir) ion, an iron (Fe) ion, a titanium (Ti) ion, a molybdenum (Mo) ion, a lanthanum (La) ion, a neodymium (Nd) ion, or a combination thereof, and specifically, for example in the case of cerium, it may be a trivalent cerium ion (Ce³⁺) or tetravalent cerium ion (Ce⁴⁺).

In an embodiment, the compound capable of trapping metal ions may be included in an amount of preferably 1 wt% to 50 wt%, and more preferably 1 wt% to 30 wt% based on the total weight of the porous support. When the content is less than 1 wt%, the metal ion trapping efficiency may not be sufficiently exhibited, whereas when the content exceeds 50 wt%, mechanical strength of the porous support may be reduced.

In an embodiment, the compound capable of trapping metal ions may include polyethylene glycol, polypropylene glycol, polybutylene glycol, crown ether, or a combination thereof, and preferably polyethylene glycol, crown ether, or a combination thereof. Although the present disclosure is not intended to be bound by any particular theory, it may be understood that as the unshared electron pairs of oxygen atoms contained in the polyethylene glycol, polypropylene glycol, polybutylene glycol, or crown ether surround the metal ions, they may be trapped in the reinforced composite membrane without being migrated.

In an embodiment, the weight average molecular weight of the polyethylene glycol, polypropylene glycol, and polybutylene glycol, particularly polyethylene glycol may be 60 g/mol to 6,000 g/mol, for example 100 g/mol to 4,000 g/mol, preferably 100 g/mol to 2,000 g/mol. When the weight average molecular weight is less than 60 g/mol, there may be a problem in that the ability to trap metal ions is reduced, whereas when the weight average molecular weight exceeds 6,000 g/mol, it is impossible to be dissolved in the dispersion and due to a decrease in fluidity of the polymer, there may be a problem in that it is difficult to have an ionic property after forming a polymer electrolyte membrane; therefore, the weight average molecular weight should be appropriately adjusted within the above range.

In an embodiment, the crown ether is 12-crown-4-ether, 15-crown-5-ether, 18-crown-6-ether, benzo-15-crown-5-ether, *N-*phenylazo-15- crown-5-ether, 2-aminomethyl-18-crown-6, or a combination thereof.

The compound capable of trapping metal ions (*e.g.*, polyethylene glycol, crown ether, *etc*.) with respect to the metal ions (*e.g*., cerium) may be contained at a weight ratio of 1:0.5 or higher, specifically 1:0.8 or higher, more specifically 1:0.8 to 1:3.5, or 1:0.8 to 1:3.3, or 1:0.8 to 1:3. When the compound capable of capturing metal ions is contained at a weight ratio of less than 1 :0.5, the trapping may not be effective, and the higher the ratio, the better the trapping effect; however, when the ratio is 1:3.5 or higher, the improvement effect may not be distinct.

In another embodiment of the present disclosure, there is provided a method for preparing a reinforced composite membrane for a fuel cell, which includes: preparing a porous support with a composition containing a precursor of a polymer for forming a porous support and a compound capable of trapping metal ions; and impregnating the porous support with a hydrogen ion conductive polymer or forming an electrolyte layer containing the hydrogen ion conductive polymer on at least one surface of the porous support.

Hereinafter, reviewing each of the steps below, step 1 is a step of preparing a porous support using a precursor of a polymer for forming a porous support and a compound capable of trapping metal ions.

The preparation of the porous support in step 1 may be performed by electrospinning the composition.

Since the porous support includes a hydrocarbon-based polymer that is insoluble in organic solvents as a polymer for forming a porous support, it may be prepared without dissolving in an organic solvent or may be prepared through a predetermined reaction after forming a nanofiber precursor using a polymer precursor for forming a porous support that is easily soluble in organic solvents. The precursor of the polymer for forming the porous support may be appropriately selected and used according to the type of polymer for forming the porous support, and the specific types of the polymer for forming the porous support are as described above.

For example, a porous support consisting of polyimide (PI) may be prepared by an imidization reaction of polyamic acid (PAA). In addition, the polyamic acid may be prepared according to a conventional preparing method, and specifically, it may be prepared by mixing diamine in a solvent, adding dianhydride thereto, followed by polymerization.

As the dianhydride, a compound selected from the group consisting of pyromellitic dianhydride (PMDA), 3,3',4,4'-benzophenonetetracarboxylic dianhydride (BTDA), 4,4'-oxydiphthalic anhydride (ODPA), 3,4,3',4'-biphenyltetracarboxylic anhydride (BPDA), bis(3,4-dicarboxyphenyl)dimethylsilane dianhydride (SiDA), and a mixture thereof may be used. In addition, as the diamine, any one selected from the group consisting of 4,4'-oxydianiline (ODA), *p*-phenylene diamine (*p*-PDA), *o*-phenylene diamine (*o*-PDA), and a mixture thereof may be used. As the solvent for dissolving the polyamic acid, any solvent selected from the group consisting of *m*-cresol, *N*-methyl-2-pyrrolidone (NMP), dimethylformamide (DMF), dimethylacetamide (DMAc), dimethylsulfoxide (DMSO), acetone, diethylacetate, tetrahydrofuran (THF), chloroform, γ-butyrolactone, and a mixture thereof may be used.

In particular, the precursor of the polymer for forming the porous support is preferably included in a concentration of 5 wt% to 20 wt% based on the total weight of the composition for electrospinning. When the concentration of the solution of the electrospinning composition is less than 5 wt%, spinning does not proceed smoothly, and thus, fiber formation is not achieved or fibers having a uniform diameter cannot be prepared, whereas when the concentration exceeds 20 wt%, the discharge pressure rapidly increases, and thus, spinning may not be performed or improved processability may be deteriorated.

The compound capable of trapping metal ions is as described above, and may specifically include polyethylene glycol, polypropylene glycol, polybutylene glycol, crown ether, or a combination thereof, it is preferable to appropriately determine the content of the compound capable of capturing metal ions to be included in the composition for electrospinning, in consideration of the content of the porous support to be finally prepared or the compound capable of capturing metal ions.

The compound capable of trapping metal ions may be included 1 to 50 parts by weight, preferably 1 to 20 parts by weight, and more preferably 1 to 10 parts by weight based on 100 parts by weight of the composition, specifically the composition for electrospinning. When the content of the metal ion-capturing compound is less than 1 part by weight based on 100 parts by weight of the porous support, the metal ion-capturing effect may be insufficient, thus not being effective in maintaining the durability of the polymer electrolyte, whereas when the content exceeds 50 parts by weight, there may be a problem in that it may cause a decrease in the physical properties of the polymer electrolyte membrane due to a decrease in the physical properties of the support.

Subsequently, after preparing the composition for electrospinning by mixing the polymer precursor for forming the porous support with a compound capable of trapping metal ions, a nanofiber web may be prepared by electrospinning the thus-prepared composition; or alternatively, after preparing a composition for electrospinning containing a precursor of a polymer for forming the porous support and a composition for electrospinning containing the compound capable of trapping metal ions, respectively, electrospinning through each spinning nozzle at the same time, and thereby, a web of nanofibers in which the nanofibers of the precursor of a polymer and the nanofibers of the compound capable of trapping metal ions are entangled together.

When preparing the composition for electrospinning, the precursor of a polymer for forming the porous support or the compound capable of trapping metal ions may be prepared by dissolving in organic solvents such as *N*-methyl-2-pyrrolidone (NMP), dimethyl formamide (DMF), dimethyl acetamide (DMAc), dimethyl sulfoxide (DMSO), and tetrahydrofuran (THF).

The electrospinning may be performed according to a conventional electrospinning process for preparing nanofibers.

Specifically, a fiber assembly may be prepared such that a certain amount of the composition for electrospinning is supplied to a spinning unit using a metering pump in a solution tank in which a composition for electrospinning is stored; the composition for electrospinning is discharged through a nozzle of the spinning unit; and a polymer solidified and cured simultaneously upon scattering is formed; additionally, focusing the solidified nanofibers in a collector having a releasing film. In particular, it is preferable that the strength of the electric field between the spinning part and the collector applied by the high voltage generating part be from 850 V/cm to 3,500 V/cm. When the strength of the electric field is less than 850 V/cm, the precursor solution is not continuously discharged, and thus, it is difficult to prepare nanofibers with a uniform thickness; additionally, the nanofibers formed after spinning cannot be smoothly focused on the collector, it is difficult to prepare fiber aggregates. In contrast, when the strength of the electric field exceeds 3,500 V/cm, the nanofibers are not accurately seated on the collector, and thus, a fiber aggregate having a normal shape cannot be obtained.

Nanofibers having a uniform fiber diameter, preferably an average diameter of 0.01 µm to 5 µm, are prepared through the spinning process, and the nanofibers are randomly arranged to form a fiber aggregate, that is, a web.

Additionally, a chemical curing process may be performed on the prepared nanofiber web.

Conventionally, the curing of hydrocarbon-based polymer precursors is performed through heat treatment; however, in the present disclosure, the nanofiber web includes a compound capable of trapping metal ions such as polyethylene glycol, polypropylene glycol, polybutylene glycol, and crown ether, and thus, when a curing process is performed by excessive heat treatment, a compound capable of trapping metal ions may be denatured, evaporated, or decomposed by heat. Accordingly, in the present disclosure, curing of the polymer precursor is induced by impregnating the nanofiber web obtained after electrospinning with a curing agent. In particular, as the curing agent, a curing agent such as acetic acid dianhydride, pyridine, triethylamine, toluenesulfonic acid, hydroxybenzyl alcohol, aminophenol, hydroxybenzaldehyde, aminobenzoic acid, *etc.* is used. The curing agent that can be used in the present disclosure is not limited to these compounds, and is preferably selected appropriately according to the type of precursor of the polymer for forming the porous support used for the preparation of the porous support.

Preferably, the content of the curing agent is determined appropriately according to the content of the polymer precursor included in the composition for electrospinning.

In the curing process above, curing for conversion of the polymer precursor into a polymer for forming a porous support occurs. For example, when the nanofibers or fiber aggregates consist of polyimide precursors during the electrospinning, they are converted into polyimide through imidization by chemical curing.

The step 2 is a step of impregnating the porous support prepared in the step 1 with the hydrogen ion conductive polymer, or forming an electrolyte layer containing the hydrogen ion conductive polymer on at least one surface of the porous support.

In an embodiment, the step 2 may include a step of preparing a mixed solution of dispersing the hydrogen ion conductive polymer in a solvent and impregnating the porous support into the mixed solution, but is not limited thereto, and various methods known in the art, such as a spray process, a screen printing process, a doctor blade process, *etc.* may be used. When the impregnation process is used, it is preferable to perform the impregnation process 1 to 5 times at room temperature for 5 to 30 minutes.

As the solvent, those which can well dissolve the hydrogen ion conductive polymer, for example, *N*-methyl-2-pyrrolidinone (NMP), dimethylformamide (DMF), dimethyl acetamide (DMA), *etc.* may be used, but is not limited thereto.

As the hydrogen ion conductive polymer, those described above may be used.

In addition, in an embodiment, the step 2 may include a step of dispersing the hydrogen ion conductive polymer in a solvent to prepare a mixed solution, a step of casting the mixed solution and then drying to form an electrolyte membrane, and a step of laminating the electrolyte membrane with the porous support.

In the step of preparing a reinforced composite membrane, since the descriptions with respect to the application and casting of the solvent and the mixed solution for dispersing the hydrogen ion conductive polymer are as described above, repeated descriptions are omitted herein.

Preferably, the hydrogen ion conductive polymer is appropriately determined in consideration of the content of the hydrogen ion conductive polymer included in the reinforced composite membrane. Specifically, the hydrogen ion conductive polymer may be included in an amount of 5 wt% to 40 wt% in the hydrogen ion conductive polymer-containing solution. When the hydrogen ion conductive polymer is included in an amount of less than 5 wt% in the solution containing the hydrogen ion conductive polymer, the hydrogen ion conductive polymer may not be sufficiently filled into the pores of the porous support and thus may form empty spaces, whereas when the content of the hydrogen ion conductive polymer exceeds 40 wt%, the viscosity of the solution containing the hydrogen ion conductive polymer is too high, and thus, it may not be filled into the pores of the porous support.

After filling the solution containing the hydrogen ion conductive polymer, the organic solvent present in the solution containing the hydrogen ion conductive polymer is removed so that the pores of the porous support can be filled with the hydrogen ion conductive polymer. Therefore, the method for preparing a reinforced composite membrane for a fuel cell according to the present disclosure may further include a process of removing the organic solvent after filling the hydrogen ion conductive polymer, and the process of removing the organic solvent may consist of a process of drying in a vacuum oven at 60°C to 150°C for 2 to 15 hours.

Hydrogen ion conductive polymer The reinforced composite membrane prepared by the above preparation method has excellent hydrogen ion conductivity, and thus, it can exhibit improved hydrogen ion conductivity when used as a polymer electrolyte membrane in a membrane-electrode assembly for a fuel cell.

According to another embodiment of the present disclosure, there are provided a membrane-electrode assembly and a fuel cell including the reinforced composite membrane.

Specifically, the membrane-electrode assembly includes an anode electrode and a cathode electrode disposed opposite to each other, and the reinforced composite membrane interposed between the anode electrode and the cathode electrode.

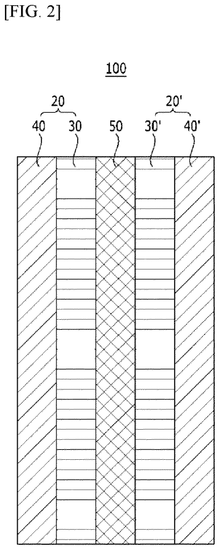

FIG. 2 is a schematic cross-sectional view of a membrane-electrode assembly according to an embodiment of the present disclosure. Referring to FIG. 2, the membrane-electrode assembly 100 includes the reinforced composite membrane 50 and the fuel cell electrodes (20, 20') disposed on both surfaces of the reinforced composite membrane 50, respectively. The electrodes (20, 20') include electrode substrates (40, 40') and catalyst layers (30, 30') formed on the surfaces of the electrode substrates (40, 40'), and may further include, between the electrode substrates (40, 40') and the catalyst layers (30, 30'), a microporous layer (not shown) containing conductive fine particles (*e.g*., carbon powder, carbon black, *etc.*) so as to facilitate diffusion of materials in the electrode substrates (40, 40').

In the membrane-electrode assembly 100, the electrode 20, which is disposed on one surface of the reinforced composite membrane 50 and causes an oxidation reaction such that hydrogen ions and electrons are generated from the fuel delivered to the catalyst layer 30 through the electrode substrate 40, is called an anode electrode, and the electrode 20', which is disposed on the other side of the reinforced composite membrane 50 and causes a reduction reaction that generates water from hydrogen ions supplied through the reinforced composite membrane 50 and the oxidizing agent delivered to the catalyst layer 30' through the electrode substrate 40', is called a cathode electrode.

The catalyst layers (30, 30') of the anode and cathode electrodes (20, 20') include a catalyst. As the catalyst, any catalyst that participates in the reaction of a battery and can be used as a catalyst for a conventional fuel cell may be used. Preferably, a platinum-based metal may be used.

The platinum-based metal may include any one selected from the group consisting of platinum (Pt), palladium (Pd), ruthenium (Ru), iridium (Ir), osmium (Os), a platinum-M alloy (in which M is any one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh)), a non-platinum alloy, and a combination thereof, and more preferably, a combination of two or more metals selected from the platinum-based catalytic metal group may be used, but is not limited thereto, and any platinum-based catalytic metal that can be used in the art may be used without limitation.

Specifically, as the platinum alloy, two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and a combination thereof may be used alone or in combination.

Additionally, as the non-platinum alloy, one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, and a combination thereof may be used.

As the catalyst, the catalyst may be used as-is (black) or it may be used by being supported on a carrier.

The carrier may be selected from carbon-based carriers, porous inorganic oxides (*e.g*., zirconia, alumina, titania, silica, ceria, *etc.*), zeolites, *etc.* The carbon-based carrier may be selected from graphite, super P, carbon fiber, carbon sheet, carbon black, Ketjen black, Denka black, acetylene black, carbon nanotube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, a combination of one or more these, but is not limited thereto, and any carrier that can be used in the art may be used without limitation.

The catalyst particles may be located on the surface of the carrier or may penetrate into the carrier while filling the internal pores of the carrier.

In the case where a precious metal supported on the carrier is used as a catalyst, a commercially available catalyst may be used, or it may be prepared and used by supporting a precious metal on a carrier. Since the process of supporting a precious metal on a support is widely known in the art, it can easily be understood by those skilled in the art even though detailed descriptions thereof are omitted in this specification.

The catalyst particles may be contained in an amount of 20 wt% to 80 wt% based on the total weight of the catalyst electrodes (30, 30'), in which when the catalyst particles are contained less than 20 wt%, there may be a problem in that the activity may decrease, whereas when the content of the catalyst particles exceeds 80 wt%, the active area thereof may decrease due to the aggregation of the catalyst particles, and thus the catalytic activity may decrease.

In addition, the catalyst electrodes (30, 30') may include a binder to improve the adhesion of the catalyst electrodes (30, 30') and delivery of hydrogen ions. As the binder, it is preferable to use an ion conductor having ion conductivity, and since the descriptions with respect to the ion conductor are as described above, repeated descriptions are omitted herein.

However, the ion conductor may be used in the form of a single material or a mixture, and may optionally be used together with a non-conductive compound for the purpose of further improving adhesion to the reinforced composite membrane 50. It is preferable to adjust the amount used to comply with the purpose of use.

As the non-conductive compound, one or more selected from the group consisting of polytetrafluoroethylene (PTFE), a tetrafluoroethylene-hexafluoropropylene copolymer (FEP), a tetrafluoroethylene-perfluoroalkylvinyl ether copolymer (PFA), ethylene/tetrafluoroethylene (ETFE), an ethylenechlorotrifluoro-ethylene copolymer (ECTFE), polyvinylidene fluoride, a polyvinylidene fluoride-hexafluoropropylene copolymer (PVdF-HFP), dodecylbenzenesulfonic acid, and sorbitol may be used.

The binder may be included in an amount of 20 wt% to 80 wt% based on the total weight of the catalyst electrodes (30, 30'). When the content of the binder is less than 20 wt%, the ions generated may not be well delivered, whereas when the content exceeds 80 wt%, it is difficult to supply hydrogen or oxygen (air) due to lack of pores and thus an active area that can react may decrease.

As the electrode substrate (40, 40'), a porous conductive substrate may be used so that hydrogen or oxygen can be smoothly supplied. Representative examples thereof may include carbon paper, carbon cloth, carbon felt, or metal cloth (a porous film consisting of a fibrous metal cloth or a metal film formed on the surface of a cloth formed of polymer fibers), but is not limited thereto. In addition, as the electrode substrates (40, 40'), it is preferable to use those subjected to repellency treatment with a fluorine-based resin so as to prevent the decrease of diffusion efficiency of reactants due to the water generated during the operation of a fuel cell. As the fluorine-based resin include polytetrafluoroethylene, polyvinylidene fluoride, polyhexafluoropropylene, polyperfluoroalkylvinyl ether, polyperfluorosulfonylfluoride alkoxyvinyl ether, fluorinated ethylene propylene, polychlorotrifluoroethylene, or a copolymer thereof may be used.

In addition, a microporous layer for enhancing the diffusion effect of the reactants in the electrode substrates (40, 40') may be further included. This microporous layer may generally include conductive powder having a small particle size, such as carbon powder, carbon black, acetylene black, activated carbon, carbon fiber, fullerene, carbon nanotube, carbon nanowire, carbon nanohorn, and a carbon nanoring.

The microporous layer is prepared by coating the electrode substrates (40, 40') with a composition which includes a conductive powder, a binder resin, and a solvent. As the binder resin, polytetrafluoroethylene, polyvinylidene fluoride, polyhexafluoropropylene, polyperfluoroalkylvinyl ether, polyperfluorosulfonylfluoride, alkoxyvinyl ether, polyvinyl alcohol, cellulose acetate. or copolymers of these, *etc.* may be preferably used. As the solvent, alcohols (*e.g*., ethanol, isopropyl alcohol, *n*-propyl alcohol, butyl alcohol, *etc*.), water, dimethylacetamide, dimethylsulfoxide, *N-*methylpyrrolidone, tetrahydrofuran, *etc.* may preferably be used. As the coating process, a screen printing method, a spray coating method, or a coating method using a doctor blade may be used depending on the viscosity of the composition, but is not limited thereto.

The membrane-electrode assembly 100 may be prepared according to a conventional preparation method of a membrane-electrode assembly for a fuel cell, except that the reinforced composite membrane 50 according to the present disclosure is used as the reinforced composite membrane 50.

A fuel cell according to still another embodiment of the present disclosure may include the membrane-electrode assembly 100.

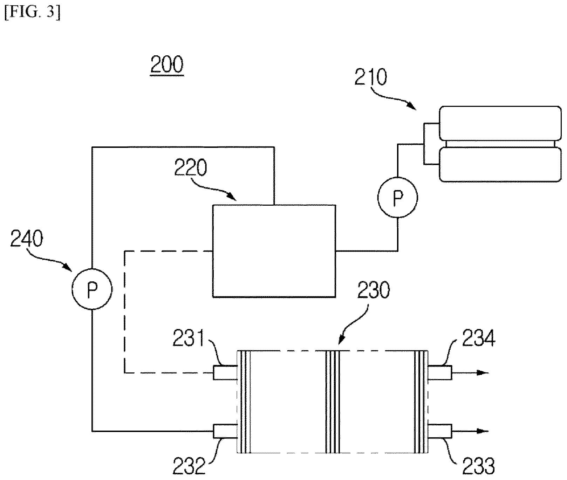

FIG. 3 is a schematic diagram showing the overall configuration of a fuel cell according to an embodiment of the present disclosure.

Referring to FIG. 3, the fuel cell 200 according to the present disclosure includes a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which supplies the oxidizing agent to the reforming unit 220 and the stack 230.

The stack 230 is provided with a plurality of unit cells which generate electrical energy by inducing an oxidation/reduction reaction between the reformed gas including hydrogen supplied from the reforming unit 220 and the oxidizing agent supplied from the oxidizing agent supplying unit 240.

Each unit cell, which refers to a unit cell that generates electricity, includes the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate is provided with a pipe-shaped first supply pipe 231 for injecting the reformed gas including hydrogen gas supplied from the reforming unit 220; and a pipe-shaped second supply pipe 232 for injecting oxygen gas; and the other end plate is provided with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

In the fuel cell, since the separator, the fuel supply unit, and the oxidizing agent supply unit constituting the electricity generation unit are used in a conventional fuel cell, a detailed description thereof will be omitted herein.

### [Detailed Description for Carrying Out the Invention]

Hereinafter, specific embodiments of the present disclosure are presented. However, the embodiments described below are only intended to specifically illustrate or explain the present disclosure, and the present disclosure is not limited thereto. In addition, the contents not described herein can be sufficiently technically inferred by those skilled in the art, and the description thereof will be omitted.

### Preparation Example 1

(1) A polytetrafluoroethylene/THF spinning solution, which has a concentration of 25 wt% and contains 1 part by weight of polyethylene glycol (Mw: 2,000) based on 100 parts by weight of the total spinning solution, was applied to a spinning nozzle and electrospun in a state where a voltage of 30 kV was applied to thereby form a polytetrafluoroethylene porous support.
(2) The prepared porous support was coated twice with an ion conductor solution, in which 20 wt% of Nafion as a hydrogen ion conductive polymer is dissolved and Ce(NO₃)₃ is contained 2 wt% relative to Nafion, using a doctor blade. After the first coating, the support was bonded, and then a second coating was performed to form a reinforced composite membrane. Thereafter, the mixture was dried at 80°C for 1 hour and then dried in a vacuum oven for 1 hour to prepare a reinforced composite membrane. (PEG weight ratio in the support: 4%)

### Preparation Example 2

A reinforced composite membrane was prepared in the same manner as in Preparation Example 1, except that polyethylene glycol was contained in an amount of 0.2 parts by weight based on 100 parts by weight of the total spinning solution. (PEG weight ratio in the support: 0.8%)

### Preparation Example 3

A reinforced composite membrane was prepared in the same manner as in Preparation Example 1, except that polyethylene glycol was contained in an amount of 2 parts by weight based on 100 parts by weight of the total spinning solution. (PEG weight ratio in the support: 8%).

### Preparation Example 4

A reinforced composite membrane was prepared in the same manner as in Preparation Example 1, except that polyethylene glycol was contained in an amount of 5 parts by weight based on 100 parts by weight of the total spinning solution. (PEG weight ratio in the support: 20%).

### Preparation Example 5

A reinforced composite membrane was prepared in the same manner as in Preparation Example 1, except that polyethylene glycol was contained in an amount of 30 parts by weight based on 100 parts by weight of the total spinning solution. (PEG weight ratio in the support: 54.5%).

### Preparation Example 6

A reinforced composite membrane was prepared in the same manner as in Preparation Example 1, except that the polyphenylene sulfide/THF spinning solution was used instead of the polytetrafluoroethylene/THF spinning solution. (PEG weight ratio in the support: 4%).

### Preparation Example 7

A reinforced composite membrane was prepared in the same manner as in Preparation Example 6, except that polyethylene glycol was contained in an amount of 2 parts by weight based on 100 parts by weight of the total spinning solution. (PEG weight ratio in the support: 8%).

### Preparation Example 8

A reinforced composite membrane was prepared in the same manner as in Preparation Example 6, except that polyethylene glycol was contained in an amount of 5 parts by weight based on 100 parts by weight of the total spinning solution. (PEG weight ratio in the support: 20%).

### Preparation Example 9

A mixture of 117 g of 2,5-dichlorobenzene, 32.0 g of sulfur, and 47.5 g (20 mol%) of 2,5-dichlorobenzoic acid was subjected to polymerization for a total of 8 hours by heating from 230°C to 300°C, and reducing the pressure in a stepwise manner from 170 torr to 1 torr or less to prepare a PPS copolymer having a carboxyl group as a repeating unit. 2-Aminomethyl-18-crown-6 was introduced into the PPS polymer through a dehydration condensation reaction. The polymer thus prepared was applied to spinning solution instead of the polyphenylene sulfide of Preparation Example 6. A reinforced composite membrane was prepared in the same manner as in Preparation Example 6, except that polyethylene glycol was not included in this solution.

### Comparative Preparation Example 1

A reinforced composite membrane was prepared in the same manner as in Preparation Example 1, except that a spinning solution containing no polyethylene glycol was used.

### Comparative Preparation Example 2

A reinforced composite membrane was prepared in the same manner as in Preparation Example 6, except that a spinning solution containing no polyethylene glycol was used.

### Examples 1 to 9 and Comparative Examples 1 to 2

A membrane-electrode assembly was prepared by forming an electrode layer on the reinforced composite membranes prepared in Preparation Examples 1 to 9 and Comparative Preparation Examples 1 to 2 using a decal transfer method. In particular, the catalyst layer of the electrode was coated with a catalyst layer-forming composition containing Pt/carbon catalyst on a release film and then dried to form a catalyst layer; the catalyst layer and the reinforced composite membrane were disposed opposite to each other on both surfaces of the reinforced composite membrane; thereafter, hot pressing was performed at a pressure of 5 kg/cm² and a temperature of 100°C to transfer the catalyst layer to both surfaces of the reinforced composite membrane. Subsequently, a gas diffusion layer (GDL) was fastened to both surfaces of the reinforced composite membrane to which the catalyst layer was bonded to prepare a membrane-electrode assembly.

### Evaluation Example 1 - Evaluation of battery performance

The membrane-electrode assemblies prepared by each of the above Examples and Comparative Examples were evaluated. Output performance was evaluated through the I-V measurement of the membrane-electrode assemblies. Specifically, in order to confirm the output performance under actual fuel cell operating conditions, each of the membrane-electrode assemblies was fastened to a fuel cell unit cell evaluation device and the temperature was maintained at 65°C. Hydrogen (100% RH) and air (100% RH) were supplied to the anode and cathode in an amount suitable for Stoichiometry 1.2/2.0, respectively. The current density at 0.6V was measured, and as a result, it was shown that the higher the value, the better the output performance. The evaluation results are shown in Table 1 below.

### Evaluation Example 2 - Evaluation of dimensional stability

The reinforced composite membranes prepared in Preparation Examples 1 to 8 and Comparative Preparation Examples 1 to 2 were dried in a vacuum oven at 80°C for 12 hours to measure the dimensions, and the dimensions were measured after immersing them in distilled water at room temperature for 24 hours and compared the ratios of dimensions before/after absorbing moisture. It was found that the lower the rate of dimensional change, the higher the stability. The evaluation results are shown in Table 1 below.

### Evaluation Example 3 - Evaluation of chemical durability

The membrane-electrode assemblies prepared by each of the above Examples and Comparative Examples were evaluated. The evaluation cell was placed in the OCV state and the cell voltage was measured at regular time intervals to calculate the reduction rate compared to the initial OCV. The measurement was performed using the Scribner 850 fuel cell test system as a measuring device (evaluated under the conditions of 90°C, 30% RH, and 50 kPa). Specifically, OCV(V)/initial OCV(V) over time (hr) was measured every 24 hours. When this ratio was 0.8 or less, the evaluation was terminated, and the measurement time was used as a criterion for durability. The evaluation results are shown in Table 1 below.

**[Table 1]**

| | Evaluation of Battery Performance | Dimensional Change | Chemical Durability |
|---|---|---|---|
| Comparative Example 1 | 998 | 6 | 504 |
| Comparative Example 2 | 1007 | 11 | 480 |
| Example 1 | 998 | 7 | 528 |
| Example 2 | 1009 | 6 | 504 |
| Example 3 | 1000 | 7 | 528 |
| Example 4 | 997 | 8 | 552 |
| Example 5 | 1003 | 16 | 552 |
| Example 6 | 1010 | 12 | 504 |
| Example 7 | 1012 | 12 | 504 |
| Example 8 | 1015 | 14 | 528 |
| Example 9 | 1010 | 12 | 504 |

It can be seen from Table 1 above that the chemical durability of a reinforced composite membrane could be improved when the reinforced composite membranes according to the embodiments of the present disclosure are used compared to when those of comparative examples were used. However, in the case of Example 2, the support was not sufficiently coated due to the low content of polyethylene glycol, and the trapping efficiency was not sufficiently exhibited, whereas in the case of Example 5, the strength of the support was somewhat lowered due to the high polyethylene glycol content.

Although the preferred embodiment of the present disclosure has been described in detail above, the above embodiments are presented as specific examples of the present disclosure and the scope of the present disclosure is not limited thereto, and various modifications and improvements of those skilled in the art using the basic concept of the present disclosure defined in the following claims also fall within the scope of rights of the disclosure.

### [Description of Reference Numerals]

| | | | | | |
|---|---|---|---|---|---|
| 10, 50: | reinforced composite membrane | | | | |
| 1,3: | electrolyte layer | 5: | porous support | | |
| 20, 20': | electrode | 30, 30': | catalyst layer | 40, 40': | electrode substrate |
| 100: | membrane-electrode | | assembly | | |
| 200: | fuel cell | | | | |
| 210: | fuel supply unit | 220: | reforming unit | | |
| 230: | stack | 231: | first supply pipe | | |
| 232: | second supply pipe | 233: | first discharge pipe | | |
| 234: | second discharge pipe | 240: | oxidizing agent supply unit | | |

## Claims

1. A reinforced composite membrane for a fuel cell comprising a porous support and a hydrogen ion conductive polymer,
wherein the reinforced composite membrane is impregnated with the hydrogen ion conductive polymer into the porous support or comprises an electrolyte layer comprising the hydrogen ion conductive polymer on at least one surface of the porous support, and
wherein the porous support further comprises a compound capable of trapping metal ions.

2. The reinforced composite membrane for a fuel cell of claim 1, wherein the compound capable of trapping metal ions comprises polyethylene glycol, polypropylene glycol, polybutylene glycol, crown ether, or a combination thereof.

3. The reinforced composite membrane for a fuel cell of claim 2, wherein the weight average molecular weight of the polyethylene glycol, polypropylene glycol, and polybutylene glycol is 60 g/mol to 6,000 g/mol.

4. The reinforced composite membrane for a fuel cell of claim 2, wherein the crown ether is 12-crown-4-ether, 15-crown-5-ether, 18-crown-6-ether, benzo-15-crown-5-ether, *N-*phenylazo-15-crown-5-ether, 2-aminomethyl-18-crown-6, or a combination thereof

5. The reinforced composite membrane for a fuel cell of claim 1, wherein the compound capable of trapping metal ions is comprised in an amount of 1 wt% to 50 wt% based on the total weight of the porous support.

6. The reinforced composite membrane for a fuel cell of claim 1, wherein the metal ions comprise cerium (Ce) ions, manganese (Mn) ions, tungsten (W) ions, cobalt (Co) ions, vanadium (V) ions, nickel (Ni) ions, chromium (Cr) ions, zirconium (Zr) ions, yttrium (Y) ions, iridium (Ir) ions, iron (Fe) ions, titanium (Ti) ions, molybdenum (Mo) ions, lanthanum (La) ions, neodymium (Nd) ions, or a combination thereof.

7. The reinforced composite membrane for a fuel cell of claim 1, wherein the thickness of the porous support is 1 µm to 100 µm.

8. A method for preparing a reinforced composite membrane for a fuel cell comprising:
preparing a porous support with a composition comprising a precursor of a polymer for forming a porous support and a compound capable of trapping metal ions; and
impregnating the porous support with a hydrogen ion conductive polymer, or forming an electrolyte layer comprising the hydrogen ion conductive polymer on at least one surface of the porous support.

9. The method for preparing a reinforced composite membrane for a fuel cell of claim 8, wherein the polymer for forming the porous support is a hydrocarbon-based polymer insoluble in organic solvents.

10. The method for preparing a reinforced composite membrane for a fuel cell of claim 8, wherein the compound capable of trapping metal ions comprises polyethylene glycol, polypropylene glycol, polybutylene glycol, crown ether, or a combination thereof.

11. The method for preparing a reinforced composite membrane for a fuel cell of claim 8, wherein the compound capable of trapping metal ions is comprised in an amount of 1 to 50 parts by weight based on 100 parts by weight of the composition.

12. The method for preparing a reinforced composite membrane for a fuel cell of claim 8, wherein the step of preparing the porous support is performed by electrospinning the composition.

13. The method for preparing a reinforced composite membrane for a fuel cell of claim 8, wherein the step of forming an electrolyte layer comprising the hydrogen ion conductive polymer comprises:
dispersing the hydrogen ion conductive polymer in a solvent to prepare a mixed solution;
forming an electrolyte layer by casting the mixed solution followed by drying; and
laminating the electrolyte layer with the porous support.

14. A membrane-electrode assembly comprising:
an anode electrode and a cathode electrode disposed opposite to each other; and
the reinforced composite membrane for a fuel cell according to claim 1 interposed between the anode electrode and the cathode electrode.

15. A fuel cell comprising the membrane-electrode assembly according to claim 14.
